# EUROPÄISCHE PATENTSCHRIFT

(11) **EP 2 218 617 B1**
(45) Veröffentlichungstag und Bekanntmachung des Hinweises auf die Patenterteilung: **29.05.2019**
(21) Anmeldenummer: 10001185.7
(22) Anmeldetag: 05.02.2010
(51) Int. Cl.: B60T 7/08, B60T 15/02, B60T 15/04, B60T 17/18, F16K 35/10

(54) **Handbetätigbare Sperreinrichtung für Ventile, insbesondere von Feststellbremsen in Nutzfahrzeugen**
Manually activated blocking device for valves, in particular hand brakes in commercial vehicles
Dispositif de verrouillage manuel pour soupapes, notamment de freins de stationnement dans des véhicules utilitaires

(30) Priorität: 05.02.2009 DE 102009007689
(43) Veröffentlichungstag der Anmeldung: 18.08.2010
(73) Patentinhaber: KNORR-BREMSE Systeme für Nutzfahrzeuge GmbH, 80809 München (DE)
(72) Erfinder: Voith, András, 1183 Budapest (HU); Tóth, János, 6000 Kecskemét (HU); Koncz, László, 6000 Kecskemét (HU); Kántor, Kornél, 6000 Kecskemét (HU); Muser, Michael, 85276 Pfaffenhofen (DE)
(74) Vertreter: Schönmann, Kurt

(56) Entgegenhaltungen:
- EP-A1- 0 172 926
- EP-A1- 0 254 161
- EP-A1- 0 713 231
- EP-B1- 1 132 275
- DE-A1- 3 207 725
- DE-U1- 9 416 060
- US-A- 4 194 529
- US-A1- 2003 116 411

## Beschreibung

Die Erfindung betrifft eine Sperreinrichtung für handbetätigbare Ventile, insbesondere für Ventile von Feststellbremsen in Nutzfahrzeugen, mit einem durch einen Betätigungsknopf betätigbaren, auf Ventilorgane einwirkenden, in einem Gehäuse verschiebbaren Schieber mit wenigstens einer verriegelbaren Endposition, wobei dem mit dem Schieber verbundenen Betätigungsknopf des Ventils eine relativ zu ihm verschiebbare Sperr- und Lösehülse zugeordnet ist, und wobei ein Verriegelungsglied gegenüber mindestens einem am Schieber befindlichen Sperrprofil wirkt.

Bei Anhängefahrzeugen herkömmlicher Bauart sind mechanische Feststellbremsen bekannt, welche in der Regel mittels einer Kurbel oder eines Handbremshebels mit Rastierung betätigbar sind. Durch einfache mechanische Maßnahmen können derartige Feststellbremsen abgesichert werden. In zunehmendem Maße werden in Anhängerbremsanlagen von Nutzfahrzeugen auch Federspeicher eingesetzt, welche die Aufgabe der rein mechanisch wirkenden herkömmlichen Feststellbremseinrichtungen übernehmen. Zur Betätigung der Feststell- bzw. Federspeicherbremsanlagen ist ein Parkventil vorgesehen; diese Parkventile können in Kombination mit Ventileinrichtungen verwendet werden, welche ein Notbremsventil und ein Löseventil enthalten, sie sind jedoch auch in Alleinstellung, in der Verbindung zum Federspeicherbremszylinder befindlich, verwendbar. Um unbefugtes Betätigen derartiger Parkventile zu verhindern, wurden bereits Lösungen vorgeschlagen.

Die EP 0 254 161 A1 und die EP 0 172 926 A1 beschreiben jeweils Vorrichtungen, die durch Beaufschlagen mit einer Kraft in axialer Betätigungsrichtung ausgelöst werden und zum Rückführen in ihre Betriebsstellung eine Drehbewegung erfordern.

Eine gattungsgemäße Sperreinrichtung ist beispielsweise aus der EP 1 132 275 B1 bekannt. Bei dieser Sperreinrichtung wirken Verriegelungsglieder in Form von losen Kugeln gegenüber einem Sperrprofil. Nachteilig bei dieser Lösung ist jedoch die in Betätigungsrichtung lange Bauform, die durch die notwendige Führung der Kugeln verursacht wird.

Der vorliegenden Erfindung liegt daher die Aufgabe zugrunde, dieses Problem der bekannten Sperreinrichtung zu lösen, eine Sperreinrichtung mit in Betätigungsrichtung kürzerer Bauform bereitzustellen und zugleich den lokalen Auflagedruck zwischen den Funktionsflächen der Teile gegenüber der Kugel-Sperrprofil-Verbindung zu optimieren.

Diese Aufgabe wird erfindungsgemäß dadurch gelöst, dass das Verriegelungsglied durch eine gegenüber dem Gehäuse festgelegte Buchse gebildet ist, die zumindest ein elastisch verformbares Element umfasst. Auf diese Weise wird eine Führung des Verriegelungsgliedes überflüssig, so dass ein bislang für die Führung des Verriegelungsgliedes verantwortliches Bauteil der Sperreinrichtung, insbesondere in einer axialen Betätigungsrichtung der Sperreinrichtung, kürzer gebaut werden kann. Dies ermöglicht insgesamt eine in der axialen Betätigungsrichtung der Sperreinrichtung kürzere Ausführungsform. Die Optimierung des Auflagedruckes erfolgt über die Elastizität des verformbaren Elements und ermöglicht weiterhin auch die radiale Abmessung der Sperreinrichtung zu verringern, auch wenn Kosten sparende Materialien, zum Beispiel einfache Kunststoffe, verwendet werden. Nützlicherweise kann vorgesehen sein, dass in zumindest einem Zustand der Sperreinrichtung das Verriegelungsglied nicht von der Sperr- und Lösehülse geführt wird. Die Sperr- und Lösehülse kann auf diese Weise in axialer Betätigungsrichtung der Sperreinrichtung möglichst kurz ausgeführt werden.

Vorteilhafterweise kann vorgesehen sein, dass das Verriegelungsglied wenigstens einen Vorsprung und/oder wenigstens eine Vertiefung umfasst, die mit dem mindestens einen Sperrprofil wechselwirkt. Die Verwendung von wenigstens einem Vorsprung und/oder wenigstens einer Vertiefung erlaubt den Aufbau eines angepassten Profils, wobei Vorsprünge an dem Verriegelungsglied in zugeordnete Ausnehmungen an dem Sperrprofil greifen bzw. Vertiefungen an dem Verriegelungsglied durch zugeordnete Vorsprünge des Sperrprofils in einem arretiertem Zustand der Sperreinrichtung besetzt werden, d.h. eingreifen.

Vorzugsweise ist vorgesehen, dass das Verriegelungsglied zumindest einen Schlitz aufweist, der einzelne Vorsprünge und/oder Vertiefungen voneinander trennt. Durch das Vorsehen von Schlitzen, beispielsweise parallel zu der axialen Betätigungsrichtung der Sperreinrichtung bzw. senkrecht hierzu, wird der Aufbau einzelner elastisch verformbarer Elemente an der Buchse erleichtert. Die einzelnen Vorsprünge und/oder Vertiefungen sind dann verschiedenen elastisch verformbaren Elementen zugeordnet, die unabhängig voneinander mit dem mindestens einen Sperrprofil wechselwirken können.

Besonders bevorzugt ist, dass die Sperr- und Lösehülse in ihrer Sperrposition das Verriegelungsglied gegen das wenigstens eine Sperrprofil presst. Auf diese Weise wird die zum Betätigen der Sperr- und Lösehülse notwendige Betätigungskraft beeinflusst.

Weiterhin kann es von Nutzen sein, dass die Sperr- und Lösehülse in ihrer Sperrposition das Verriegelungsglied gegenüber dem wenigstens einen Sperrprofil fixiert. Dies erlaubt ein Betätigen der Sperreinrichtung ohne vorheriges Überführen der Sperr- und Lösehülse in ihre Löseposition zu unterbinden. Insbesondere kann auf diese Weise ein ungewolltes Betätigen der Sperreinrichtung durch einfaches Drücken bzw. Ziehen an einem Betätigungsknopf vermieden werden.

Insbesondere kann vorgesehen sein, dass das Verriegelungsglied außerhalb der wenigstens einen verriegelbaren Endposition gegen den Schieber drückt, um eine Betätigungskraft für den Schieber festzulegen. Die zum Bewegen des Schiebers, das heißt zum Überführen der Sperreinrichtung von einer Endposition in eine andere Position notwendige Kraft ist auf diese Weise beeinflussbar.

Vorteilhafterweise kann vorgesehen sein, dass die Sperreinrichtung außerhalb der wenigstens einen verriegelbaren Endposition selbsthaltend ist. Durch die Selbsthaltung wird der Benutzer beim Betätigen der Sperreinrichtung dazu angehalten, die angestrebte Position nach Ende der Betätigung aktiv zu bestimmen.

In diesem Zusammenhang kann es von Vorteil sein, dass die Sperr- und Lösehülse geeignet ist, in einer zwischen ihrer Sperr- und Löseposition liegenden Stellung das Verriegelungsglied gegen das wenigstens eine Sperrprofil zu pressen, um die für die Selbsthaltung notwendige Haltekraft zu erzeugen.

Vorteilhafterweise ist vorgesehen, dass die Sperreinrichtung zwei verriegelbare Endpositionen umfasst. Beispielsweise kann auf diese Weise sowohl das Öffnen als auch das Schließen einer Feststellbremse über die Sperreinrichtung an das vorherige Entriegeln gekoppelt werden.

Vorzugsweise kann vorgesehen sein, dass die Sperr- und Lösehülse gegenüber dem am Ende des Schiebers befestigten Betätigungsknopf durch eine Feder verspannt ist. Dies erlaubt ein automatisches Überführen der Sperr- und Lösehülse in ihre Sperrposition.

Besonders bevorzugt ist, dass die Sperr- und Lösehülse in ihrer Sperrposition an einem Anschlag des Gehäuses anliegt. Auf diese Weise kann das Innere der Sperreinrichtung im unbetätigten Zustand der Sperr- und Lösehülse vor schädlichen Umwelteinflüssen geschützt werden.

Insbesondere kann vorgesehen sein, dass die Sperreinrichtung einem Parkventil eines von einem Zugfahrzeug abkuppelbaren Anhängerfahrzeugs zugeordnet ist.

Die Erfindung wird nun mit Bezug auf die begleitenden Zeichnungen anhand einer bevorzugten Ausführungsform beispielhaft erläutert.

Es zeigen:
- Figur 1: eine erfindungsgemäße Sperreinrichtung in einer ersten Endposition mit einer Sperr- und Lösehülse in ihrer Sperrposition;
- Figur 2: eine erfindungsgemäße Sperreinrichtung in einer ersten Endposition mit einer Sperr- und Lösehülse in ihrer Löseposition;
- Figur 3: eine erfindungsgemäße Sperreinrichtung in einer zweiten Endposition mit einer Sperr- und Lösehülse in ihrer Löseposition;
- Figur 4: eine erfindungsgemäße Sperreinrichtung in einer zweiten Endposition mit einer Sperr- und Lösehülse in ihrer Sperrposition und
- Figur 5: ein erfindungsgemäßes Verriegelungsglied.

In den folgenden Zeichnungen bezeichnen gleiche Bezugszeichen gleiche oder gleichartige Teile.

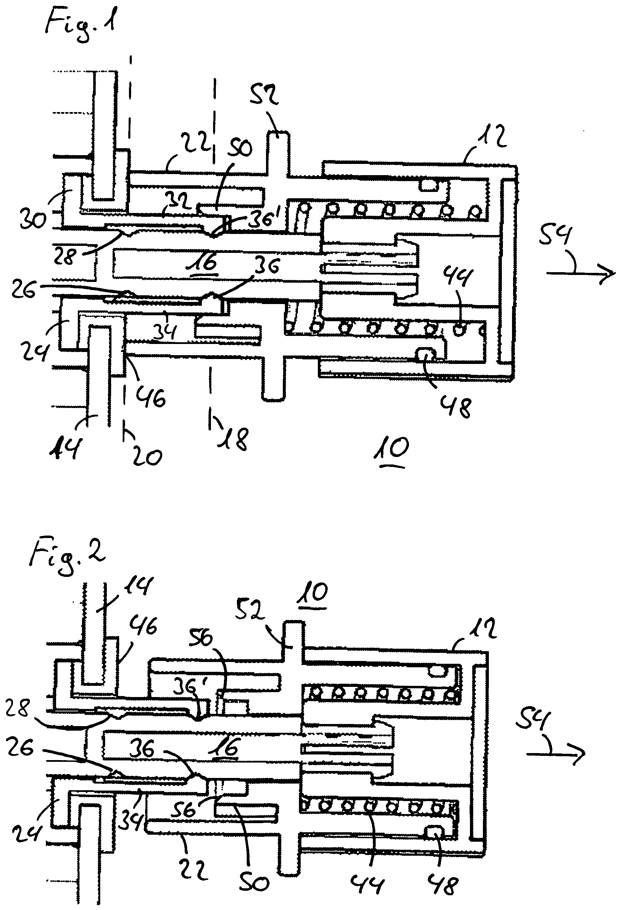

Figur 1 zeigt eine erfindungsgemäße Sperreinrichtung in einer ersten Endposition mit einer Sperr- und Lösehülse in ihrer Sperrposition. Die dargestellte Sperreinrichtung 10 ist entlang einer Betätigungsrichtung 54 betätigbar, wobei ein Schieber 16 im Inneren der Sperreinrichtung 10, beispielsweise mit nicht dargestellten Bestandteilen eines Parkventils gekoppelt ist und dieses öffnen bzw. schließen kann. An einem Außenumfang des Schiebers 16 sind ein Sperrprofil 26 und ein weiteres Sperrprofil 28 in Form von Vertiefungen angeordnet. Es ist jedoch auch denkbar, dass das Sperrprofil 26 und/oder das weitere Sperrprofil 28 neben Vertiefungen auch Vorsprünge aufweist bzw. dass die beiden Sperrprofile 26, 28 im Gegensatz zur dargestellten Ausführungsform unterschiedlich ausgeführt sind. Die dargestellte Sperreinrichtung 10 befindet sich in einer Endposition 18, wobei ein eine Buchse 30 umfassendes Verriegelungsglied 24 über elastisch verformbare Elemente 32, 34 mit einem Vorsprung 36 und einem weiteren Vorsprung 36' in das Sperrprofil 26 bzw. das weitere Sperrprofil 28 greift und durch eine Verriegelung 50 an einer Sperr- und Lösehülse 22 in dieser Position fixiert ist. Das Verriegelungsglied 24 ist an einem Gehäuse 14 festgelegt und die in den beiden Sperrprofilen 26, 28 fixierten Vorsprünge 36, 36' befinden sich an der dem Gehäuse 14 abgewandten Seite des Verriegelungsgliedes 24 an dem elastisch verformbaren Element 34 bzw. dem weiteren elastisch verformbaren Element 32. Die Sperr- und Lösehülse 22 ist gegenüber einem Betätigungsknopf 12 durch eine Feder 44 verspannt, so dass die Sperr- und Lösehülse 22 zumindest in ihrer Verriegelungsposition an einem Anschlag 46 an dem Gehäuse 14 anliegt und dabei insbesondere den Schieber 16 und das Verriegelungsglied 24 vor Umwelteinflüssen schützt. Die Sperr- und Lösehülse 22 und der Betätigungsknopf 12 sind über eine Dichtung 48 zueinander beweglich gelagert, wobei die Dichtung 48 insbesondere die im Inneren der Sperreinrichtung 10 angeordnete Feder 44 vor schädlichen Einflüssen schützt.

Im Folgenden wird ein Überführen der dargestellten Sperreinrichtung 10 aus der ersten Endposition 18 in eine weitere Endposition 20 ausführlich beschrieben.

Figur 2 zeigt eine erfindungsgemäße Sperreinrichtung in einer ersten Endposition mit einer Sperr- und Lösehülse in ihrer Löseposition. Gegenüber dem aus Figur 1 bekannten Zustand der Sperreinrichtung 10 ist bei dem in Figur 2 dargestellten Zustand der Sperreinrichtung 10 die Sperr- und Lösehülse 22 aus ihrer Sperrposition (siehe Figur 1) in ihre Löseposition überführt. Dies geschieht üblicherweise durch einen Benutzer, der mit einer Hand einen an der Sperr- und Lösehülse 22 angeordneten Greifring 52 greift und diesen gegen den ebenfalls durch seine Hand fixierten Betätigungsknopf 12 in Betätigungsrichtung 54 presst. Dabei wird die Sperr- und Lösehülse 22 von dem Gehäuse 14 weggezogen und entgegen der Feder 44 in den Betätigungsknopf 12 hineingeschoben. Gleichzeitig wird die Verriegelung 50 von dem Vorsprung 36 und dem weiteren Vorsprung 36' wegbewegt. In diesem Zustand ist ein Bewegen des Schiebers 16 in Betätigungsrichtung 54 durch Ziehen an dem Betätigungsknopf 12 möglich.

Durch das Ziehen an dem Betätigungsknopf 12 wird ein Zug auf den Schieber 16 und die beiden Sperrprofile 26, 28 ausgeübt. Das Verriegelungsglied 24, das über die beiden an elastisch verformbaren Elementen 32, 34 angeordneten Vorsprünge 36, 36' mit den beiden Sperrprofilen 26, 28 wechselwirkt, bewirkt eine Haltekraft, die durch die Elastizität der beiden verformbaren Elemente 32, 34 und das Profil der beiden Sperrprofile 26, 28 bzw. der beiden Vorsprünge 36, 36' bestimmt ist. Wird eine ausreichend große Zugkraft in Betätigungsrichtung 54 an dem Betätigungsknopf 12 angelegt, wird dieser zusammen mit dem Schieber 16 in Betätigungsrichtung 54 von dem Gehäuse 14 weggezogen, wobei die beiden elastisch verformbaren Elemente 32, 34 in zur Betätigungsrichtung 54 radialer Richtung nach außen gebogen werden. Dabei können die beiden elastisch verformbaren Elemente 32, 34 über die Vorsprünge 36, 36' durch auftretende Reibungskräfte auch zwischen verriegelbaren Endpositionen 18, 20 die zum Verschieben des Schiebers 16 notwendige Betätigungskraft bestimmen beziehungsweise beeinflussen. Insbesondere kann diese zum Verschieben des Schiebers 16 notwendige Betätigungskraft so groß gewählt sein, dass die von der Feder 44 aufbringbare Kraft beim Loslassen der Sperr- und Lösehülse 22 nicht ausreichend ist, den Schieber 16 in die weitere Endposition 22 zu überführen. Dies kann beispielsweise durch eine an der Verriegelung 50 angeordnete Schräge 56 unterstützt werden, die die beiden elastisch verformbaren Elemente 32, 34 mit den Vorsprüngen 36, 36' in radialer Richtung nach innen gegen die beiden Sperrprofile 26, 28 presst und dabei die zum Verschieben des Schiebers 16 notwendige Betätigungskraft zusätzlich erhöht.

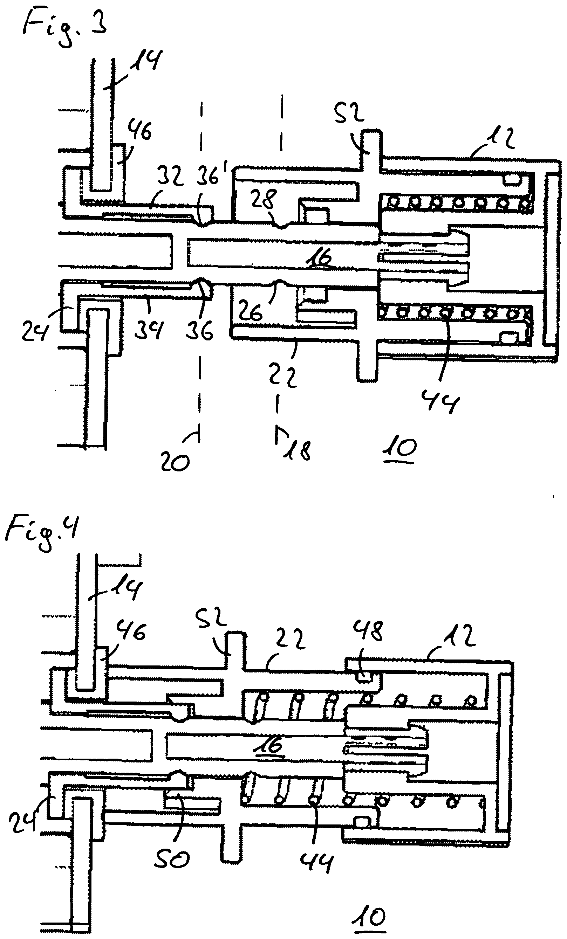

Figur 3 zeigt eine erfindungsgemäße Sperreinrichtung in einer zweiten Endposition mit einer Sperr- und Lösehülse in ihrer Löseposition. Die in Figur 3 dargestellte Sperreinrichtung 10 unterscheidet sich von der in Figur 2 dargestellten Sperreinrichtung durch die Position des Schiebers 16, der sich nicht in der Endposition 18 sondern in der weiteren Endposition 20 befindet. Bei dem in Figur 3 dargestellten Zustand der Sperreinrichtung 10 ist, analog zu dem in Figur 2 dargestellten Zustand, das Verriegelungsglied 24 nicht geführt. Der Schieber 16 ist über den Betätigungsknopf 12 in Betätigungsrichtung 54 so weit aus dem Gehäuse 14 herausgezogen, dass die Vorsprünge 36, 36' gegenüber den Sperrprofilen 26, 28 in eine der weiteren Endposition 20 zugeordnete Stellung gelangen, die verriegelbar ist.

Figur 4 zeigt eine erfindungsgemäße Sperreinrichtung in einer zweiten Endposition mit einer Sperr- und Lösehülse in ihrer Sperrposition. Wird die in Figur 3 dargestellte Sperreinrichtung 10 sich selbst überlassen, das heißt, die Sperr- und Lösehülse 22 ist von dem Benutzer wieder freigegeben, überführt die Feder 44 die Sperr- und Lösehülse 22 aus ihrer Löseposition wieder in ihre Sperrposition und der Schieber 16 ist erneut gegenüber dem Verriegelungsglied 24 durch die Verriegelung 50 über die beiden Sperrprofile 26, 28 und die Vorsprünge 36, 36' fixiert.

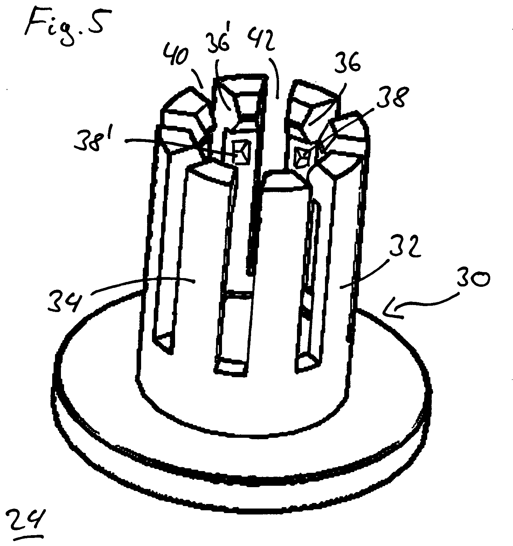

Figur 5 zeigt ein erfindungsgemäßes Verriegelungsglied. Das dargestellte Verriegelungsglied 24 umfasst im Wesentlichen die Buchse 30, die sich in der aus den vorhergehenden Figuren bekannten Betätigungsrichtung 54 erstreckt. Dabei sind elastisch verformbare Elemente 32, 34, die durch Schlitze 40, 42 voneinander getrennt sind, mit Vorsprüngen 36, 36' und Vertiefungen 38, 38' vorgesehen. Die elastisch verformbaren Elemente 32, 34 mit den Vorsprüngen 36, 36' und den Vertiefungen 38, 38' umfassen im montierten Zustand konzentrisch den Schieber 16 mit den zugeordneten Sperrprofilen 26, 28. Die Schlitze 40, 42 begrenzen beziehungsweise trennen einzelne elastisch verformbare Elemente 32, 34. Neben den in Figur 5 dargestellten Schlitzen 40, 42 in axialer Betätigungsrichtung 54 sind auch Schlitze in der dazu senkrechten Ebene denkbar, wodurch mehrere hintereinander liegende elastisch verformbare Elemente in axialer Betätigungsrichtung 54 realisiert werden können.

### Bezugszeichenliste

- 10: Sperreinrichtung
- 12: Betätigungsknopf
- 14: Gehäuse
- 16: Schieber
- 18: Endposition
- 20: weitere Endposition
- 22: Sperr- und Lösehülse
- 24: Verriegelungsglied
- 26: Sperrprofil
- 28: weiteres Sperrprofil
- 30: Buchse
- 32: weiteres verformbares Element
- 34: verformbares Element
- 36: Vorsprung
- 36': weiterer Vorsprung
- 38: Vertiefung
- 38': weitere Vertiefung
- 40: Schlitz
- 42: weiterer Schlitz
- 44: Feder
- 46: Anschlag
- 48: Dichtung
- 50: Verriegelung
- 52: Greifring
- 54: Betätigungsrichtung
- 56: Schräge

## Patentansprüche

1. Sperreinrichtung (10) für handbetätigbare Ventile, insbesondere für Ventile von Feststellbremsen in Nutzfahrzeugen, mit einem durch einen Betätigungsknopf (12) betätigbaren, auf Ventilorgane einwirkenden, in einem Gehäuse (14) verschiebbaren Schieber (16) mit wenigstens einer verriegelbaren Endposition (18, 20),
- wobei dem mit dem Schieber (16) verbundenen Betätigungsknopf (12) des Ventils eine relativ zu ihm verschiebbare Sperr- und Lösehülse (22) zugeordnet ist, und
- wobei ein Verriegelungsglied (24) gegenüber mindestens einem am Schieber (16) befindlichen Sperrprofil (26, 28) wirkt,
**dadurch gekennzeichnet, dass** das Verriegelungsglied (24) durch eine gegenüber dem Gehäuse (14) festgelegte Buchse (30) gebildet ist, die zumindest ein elastisch verformbares Element (32, 34) umfasst.

2. Sperreinrichtung (10) nach Anspruch 1, **dadurch gekennzeichnet, dass** in zumindest einem Zustand der Sperreinrichtung (10) das Verriegelungsglied (24) nicht geführt wird.

3. Sperreinrichtung (10) nach Anspruch 1 oder 2, **dadurch gekennzeichnet, dass** das Verriegelungsglied (24) wenigstens einen Vorsprung (36, 36') und/oder wenigstens eine Vertiefung (38, 38') umfasst, die mit dem mindestens einen Sperrprofil (26, 28) wechselwirkt.

4. Sperreinrichtung (10) nach einem der vorhergehenden Ansprüche, **dadurch gekennzeichnet, dass** das Verriegelungsglied (24) zumindest einen Schlitz (40,42) aufweist, der einzelne Vorsprünge (36, 36') und/oder Vertiefungen (38, 38') voneinander trennt.

5. Sperreinrichtung (10) nach einem der vorhergehenden Ansprüche, **dadurch gekennzeichnet, dass** die Sperr- und Lösehülse (22) in ihrer Sperrposition das Verriegelungsglied (24) gegen das wenigstens eine Sperrprofil (26, 28) presst.

6. Sperreinrichtung (10) nach einem der vorhergehenden Ansprüche, **dadurch gekennzeichnet, dass** die Sperr- und Lösehülse (22) in ihrer Sperrposition das Verriegelungsglied (24) gegenüber dem wenigstens einen Sperrprofil (26, 28) fixiert.

7. Sperreinrichtung (10) nach einem der vorhergehenden Ansprüche, **dadurch gekennzeichnet, dass** das Verriegelungsglied (24) außerhalb der wenigstens einen verriegelbaren Endposition (18, 20) gegen den Schieber (16) drückt, um eine Betätigungskraft für den Schieber (16) festzulegen.

8. Sperreinrichtung (10) nach einem der vorhergehenden Ansprüche, **dadurch gekennzeichnet, dass** die Sperreinrichtung (10) außerhalb der wenigstens einen verriegelbaren Endposition (18, 20) selbsthaltend ist.

9. Sperreinrichtung (10) nach Anspruch 8, **dadurch gekennzeichnet, dass** die Sperr- und Lösehülse (22) geeignet ist, in einer zwischen ihrer Sperr- und Löseposition liegenden Stellung das Verriegelungsglied (24) gegen das wenigstens eine Sperrprofil (26, 28) zu pressen, um die für die Selbsthaltung notwendige Haltekraft zu erzeugen.

10. Sperreinrichtung (10) nach einem der vorhergehenden Ansprüche, **dadurch gekennzeichnet, dass** die Sperreinrichtung (10) zwei verriegelbare Endpositionen (18, 20) umfasst.

11. Sperreinrichtung (10) nach einem der vorhergehenden Ansprüche, **dadurch gekennzeichnet, dass** die Sperr- und Lösehülse (22) gegenüber dem am Ende des Schiebers (16) befestigten Betätigungsknopf (12) durch eine Feder (44) verspannt ist.

12. Sperreinrichtung (10) nach einem der vorhergehenden Ansprüche, **dadurch gekennzeichnet, dass** die Sperr- und Lösehülse (22) in ihrer Sperrposition an einem Anschlag (46) des Gehäuses (14) anliegt.

13. Sperreinrichtung (10) nach einem der vorhergehenden Ansprüche, **dadurch gekennzeichnet, dass** die Sperreinrichtung (10) einem Parkventil eines von einem Zugfahrzeug abkuppelbaren Anhängerfahrzeugs zugeordnet ist.

## Claims

1. Blocking device (10) for manually actuable valves, in particular for valves of parking brakes in commercial vehicles, with a slide (16) actuable by an actuating button (12), acting on valve elements, displaceable in a housing (14) and having at least one lockable end position (18, 20),
- wherein the actuating button (12) of the valve, which is connected to the slide (16), is assigned a blocking and releasing sleeve (22) displaceable relative thereto, and
- wherein a locking member (24) acts against at least one locking profile (26, 28) provided on the slide (16),
**characterised in that** the locking member (24) is represented by a bushing (30), which is fixed relative to the housing (14) and comprises at least one elastically deformable element (32, 34).

2. Blocking device (10) according to claim 1, **characterised in that** the locking member (24) is not guided in at least one state of the blocking device (10).

3. Blocking device (10) according to claim 1 or 2, **characterised in that** the locking member (24) comprises at least one projection (36. 36') and/or at least one recess (38, 38') interacting with the at least one locking profile (26, 28).

4. Blocking device (10) according to any of the preceding claims, **characterised in that** the locking member (24) has at least one slot (40, 42), which separates individual projections (36. 36') and/or recesses (38, 38') from one another.

5. Blocking device (10) according to any of the preceding claims, **characterised in that** the blocking and releasing sleeve (22) presses the locking member (24) against the at least one locking profile (26, 28) in its blocking position.

6. Blocking device (10) according to any of the preceding claims, **characterised in that** the blocking and releasing sleeve (22) fixes the locking member (24) relative to the at least one locking profile (26, 28) in its blocking position.

7. Blocking device (10) according to any of the preceding claims, **characterised in that** the locking member (24) presses against the slide (16) outside the at least one lockable end position (18, 20) in order to set an actuating force for the slide (16).

8. Blocking device (10) according to any of the preceding claims, **characterised in that** the blocking device (10) is self-retaining outside the at least one lockable end position (18, 20).

9. Blocking device (10) according to any of the preceding claims, **characterised in that** the blocking and releasing sleeve (22) is suitable for pressing the locking member (24) against the at least one locking profile (26, 28) in a position between its locking and its release position in order to generate the holding force required for self-retention.

10. Blocking device (10) according to any of the preceding claims, **characterised in that** the blocking device (10) has two lockable end positions (18, 20).

11. Blocking device (10) according to any of the preceding claims, **characterised in that** the blocking and releasing sleeve (22) is clamped by a spring (44) against the actuating button (12) secured to the end of the slide (16).

12. Blocking device (10) according to any of the preceding claims, **characterised in that** the blocking and releasing sleeve (22) bears against a stop (46) of the housing (14) in its blocking position.

13. Blocking device (10) according to any of the preceding claims, **characterised in that** the blocking device (10) is assigned to a parking valve of a trailer vehicle which can be uncoupled from a traction vehicle.

## Revendications

1. Dispositif (10) de blocage de soupapes pouvant être actionnées à la main, notamment de soupapes de freins de stationnement de véhicules utilitaires, comprenant un tiroir (16), qui peut être actionné par un bouton (12) d'actionnement, qui agit sur des organes de soupape, qui peut coulisser dans un boîtier (14) et qui a au moins une position (18, 20) d'extrémité pouvant être verrouillée,
- dans lequel au bouton (12) d'actionnement, relié au tiroir (16), de la soupape est associé un manchon de blocage et de déblocage, qui peut coulisser par rapport à lui et
- dans lequel un organe (24) de verrouillage agit par rapport à au moins un profil (26, 28) de blocage se trouvant sur le tiroir (16),
**caractérisé en ce que** l'organe (24) de verrouillage est formé d'une douille (30), qui est fixée au boîtier (14) et qui comprend au moins un élément (32, 34) déformable élastiquement.

2. Dispositif (10) de blocage suivant la revendication 1, **caractérisé en ce que**, dans au moins un état du dispositif (10) de blocage, l'organe (24) de verrouillage n'est pas guidé.

3. Dispositif (10) de blocage suivant la revendication 1 ou 2, **caractérisé en ce que** l'organe (24) de verrouillage comprend au moins une saillie (36, 36') et/ou au moins une cavité (38, 38'), qui interagit avec le au moins un profil (26, 28) de blocage.

4. Dispositif (10) de blocage suivant l'une des revendications précédentes, **caractérisé en ce que** l'organe (24) de verrouillage a au moins une fente (40, 42), qui sépare les unes des autres diverses saillies (36, 36') et/ou cavités (38, 38').

5. Dispositif (10) de blocage suivant l'une des revendications précédentes, **caractérisé en ce que** le manchon (22) de blocage et de déblocage presse, dans sa position de blocage, l'organe (24) de verrouillage sur le au moins un profil (26, 28) de blocage.

6. Dispositif (10) de blocage suivant l'une des revendications précédentes, **caractérisé en ce que** le manchon (22) de blocage et de déblocage immobilise, dans sa position de blocage, l'organe (24) de verrouillage par rapport au au moins un profil (26, 28) de blocage.

7. Dispositif (10) de blocage suivant l'une des revendications précédentes, **caractérisé en ce que** l'organe (24) de verrouillage pousse, en-dehors de la au moins une position (18, 20) d'extrémité pouvant être verrouillée, sur le tiroir (16) pour fixer une force d'actionnement du tiroir (16).

8. Dispositif (10) de blocage suivant l'une des revendications précédentes, **caractérisé en ce que** le dispositif (10) de blocage se maintient de soi-même en-dehors de la au moins une position (18, 20) d'extrémité pouvant être verrouillée.

9. Dispositif (10) de blocage suivant la revendication 8, **caractérisé en ce que** le manchon (22) de blocage et de déblocage est propre à presser, dans une position se trouvant entre sa position de blocage et sa position de déblocage, l'organe (24) de verrouillage sur le au moins un profil (26, 28) de blocage, afin de produire la force de maintien nécessaire à l'auto-maintien.

10. Dispositif (10) de blocage suivant l'une des revendications précédentes, **caractérisé en ce que** le dispositif (10) de blocage comprend deux positions (18, 20) d'extrémité pouvant être verrouillées.

11. Dispositif (10) de blocage suivant l'une des revendications précédentes, **caractérisé en ce que** le manchon (22) de blocage et déblocage est, par un ressort (44), contraint par rapport au bouton (12) d'actionnement fixé à l'extrémité du tiroir (16).

12. Dispositif (10) de blocage suivant l'une des revendications précédentes, **caractérisé en ce que** le manchon (22) de blocage et de déblocage s'applique, dans sa position de blocage, à une butée (46) du boîtier (14).

13. Dispositif (10) de blocage suivant l'une des revendications précédentes, **caractérisé en ce que** le dispositif (10) de blocage est associé à une soupape de stationnement d'un véhicule remorque pouvant être dételer d'un véhicule de traction.
